# EUROPÄISCHE PATENTSCHRIFT

(11) **EP 4 118 375 B1**
(45) Veröffentlichungstag und Bekanntmachung des Hinweises auf die Patenterteilung: **24.04.2024**
(21) Anmeldenummer: 21715800.5
(22) Anmeldetag: 23.03.2021
(51) Int. Cl.: F16P 3/14, B41F 33/00, B41J 15/04, B65H 19/12, B65H 19/30, B65H 26/08

(54) **VERFAHREN UND VORRICHTUNG ZUR ÜBERWACHUNG EINES IN EINEN SICHERHEITSBEREICH EINES ROLLENAB- ODER -AUFWICKLERS FÜHRENDEN ZUGANGES SOWIE DRUCKMASCHINE**
METHOD AND DEVICE FOR MONITORING AN ACCESS POINT LEADING INTO A SAFETY REGION OF A ROLL WINDER OR UNWINDER, AND PRINTING MACHINE
PROCÉDÉ ET DISPOSITIF DE SURVEILLANCE D'UN POINT D'ACCÈS DÉBOUCHANT DANS UNE ZONE DE SÉCURITÉ D'UNE ENROULEUSE OU D'UNE DÉROULEUSE À ROULEAUX, ET MACHINE D'IMPRESSION

(30) Priorität: 24.07.2020 DE 102020119565
(43) Veröffentlichungstag der Anmeldung: 18.01.2023
(73) Patentinhaber: Koenig & Bauer AG, 97080 Würzburg (DE)
(72) Erfinder: GRETSCH, Harald, 97246 Eibelstadt (DE); KRIMMEL, Jürgen, 97535 Wasserlosen (DE); MAIERHÖFER, Manfred, 97332 Volkach (DE); SCHULZ, Günter, 97453 Abersfeld (DE); UGLJESA, Senad, 97249 Eisingen (DE)
(74) Vertreter: Koenig & Bauer AG
(86) Internationale Anmeldenummer: PCT/EP2021/057387
(87) Internationale Veröffentlichungsnummer: WO 2022/017652

(56) Entgegenhaltungen:
- EP-A1- 3 339 715
- DE-A1-102017 211 828

## Beschreibung

Die Erfindung betrifft ein Verfahren und eine Vorrichtung zur Überwachung eines in einen Sicherheitsbereich eines Rollenab- oder -aufwicklers führenden Zuganges sowie eine Druckmaschine mit einer solchen Vorrichtung gemäß dem Oberbegriff des Anspruches 1, 8 bzw. 14.

Durch die DE 10 2017 211 828 A1 ist eine Rollendruckmaschine mit einem Rollenab- und einem Rollenaufwickler bekannt, wobei ein Zugang zu einem Sicherheitsbereich des Rollenaufwicklers durch eine Überwachungssensorik in Art eines mehrstrahligen, z. B. zweistrahligen, Lichtschrankensystems mit Muting-Funktion ausgebildet ist.

Die DE 10 2010 031 650 A1 betrifft einen Rollenwechsler mit Sicherheitsbereich, wobei eine Überwachung eines Zugangs in einen Sicherheitsbereich durch ein Lichtgitter mit einer Vielzahl von Lichtschranken erfolgt.

Die EP 3 415 804 A1 betrifft eine Sicherheitsvorrichtung zur Sicherung eines Durchganges, wobei durch einen z. B. mittig oberhalb des Durchgangs en Scanner ein Prüfen des Zuganges auf ein erlaubtes Objekt erfolgt und bei Vorliegen eines solchen ein sog. Muting, d. h. Überbrücken der Sicherheitsfunktion stattfindet. Im Ausführungsbeispiel mit vier parallel nebeneinander laufenden Transportbahnen wird der Durchgang mittels zweier, in den jeweiligen oberen Ecken angeordnete Scanner überwacht. Dabei betrachten die beiden Scanner zwei Schutzfelder, die sich zum gesamten Überwachungsbereich ergänzen.

In der DE 10 2006 029 643 A1 werden durch einen Sensor oder ggf. zwei Sensoren Objektmerkmale einer herannahenden Objektes erfasst, anhand deren eine Klassifizierung als sicherheitskritisches oder nichtsicherheitskritisches Objekt stattfindet. Im Fall eines sicherheitskritischen Objektes wird noch vor Erreichen des Sicherheitsbereichs ein Alarmsignal generiert.

Die DE 10 2019 116 806 A1 betrifft eine Vorrichtung und Verfahren zur Überwachung eines Gefahrenbereichs, wobei ein erster Laser zur Überwachung einer zur Öffnung parallelen Ebene und ein zweiter Laser zur Überwachung einer zweiten Ebene vorgesehen ist.

Durch die DE 20 2017 103 399 U1 ist ein Zugangsabsicherungssystem offenbart, wobei durch einen ersten Sensor die Zugangsebene überwacht wird und durch einen zweiten Sensor ein sich im Vorfeld annäherndes Objekt in seiner Kontur erfasst wird.

Die EP 3 339 715 A1 betrifft ein Zugangsabsicherungssystem insbesondere zum Schutz des Personals vor Robotern und Maschinen bei automatischen Herstellungs- und Verpackungsprozessen. Das Zugangsabsicherungssystem umfasst zwei Laserscanner die aneinander angrenzende oder überlappende Sicherheits-Schutzfelder sowie je Seite zwei oder mehr Detektions-Schutzfelder überwachen. Durch die Detektions-Schutzfelder sollen als zulässig für den Durchtritt definierte Objekte erkannt werden um das Sicherheitsfeld in einem Bereich entsprechend des bekannten Objektes zu Deaktivieren. Die linken und rechten Detektions-Schutzfelder sind auf für die erlaubten Objekte markante Stellen gerichtet.

Der Erfindung liegt die Aufgabe zugrunde, ein Verfahren und eine Vorrichtung zur Überwachung eines in einen Sicherheitsbereich eines Rollenab- oder -aufwicklers führenden Zuganges sowie eine Druckmaschine mit einer solchen Vorrichtung zu schaffen.

Die Aufgabe wird erfindungsgemäß durch die Merkmale des Anspruches 1, 8 bzw. 14 gelöst.

Die mit der Erfindung erzielbaren Vorteile bestehen insbesondere darin, dass die Lösung in einfacher Weise, z. B. ohne den Umfang der Sensorik ändern zu müssen, auf Anwendungsfälle mit unterschiedlichen Rollengrößen- und/oder Rollentypenspektren anzupassen ist. So sind beispielsweise ohne eine vergrößerte Anzahl von Sensoren auch Anwendungsfälle realisierbar, deren verwendbares Rollenspektrum von z. B. 200 mm Rollendurchmesser bis hin zu 1.800 mm Rollendurchmesser reicht und/oder einen über die Länge variierenden gestuften Rollendurchmesser aufweisen. Solch großen und/oder gar gestuften Rollen kommt insbesondere beim Verpackungsdruck Bedeutung zu und/oder beim industriellen Druck mit einem ein Druckwerk umfassenden Druckmaschine, welches nach einem druckformlosen Druckverfahren, z. B. Inkjet-Druckverfahren, arbeitet.

Bevorzugter Weise überstreichen zum Überwachung eines in einen Sicherheitsbereich eines Rollenab- oder -aufwicklers führenden Zuganges, durch welchen Materialrollen hinein- und/oder heraustransportierbar sind, wobei der Zugang durch eine zwischen zwei den Sicherheitsbereich mechanisch begrenzenden Elementen vorgesehene Öffnung gebildet ist, und wobei der Zugang durch eine Überwachungssensorik überwacht wird. Zwei von der Überwachungssensorik umfasste Scanner überstreichen mit ihren jeweiligen Messstrahlen jeweils einen in einer selben, in der Öffnung verlaufenden Ebene liegenden Winkelbereich. Dabei wird der Zugang in einem Muster von Schutzfeldern mit mehreren Schutzfeldern unterschiedlicher Größe und/oder Form überwacht, wobei für mehrere der Schutzfelder unterschiedlicher Größe und/oder Form die Scanbilder der beiden Scanner in voneinander verschiedenen, sich aneinander anschließenden oder überlappenden Teilbereichen der Ebene auf eine - insbesondere gleichzeitige - Schutzfeldverletzung der betreffenden Schutzfelder unterschiedlicher Größe und/oder Form hin überprüft werden, und über eine Auswertung der in den beiden Teilbereichen gewonnenen Verletzungsmustern von verletzten Schutzfeldern eine Information über die Zulässigkeit einer festgestellten Schutzfeldverletzung abgeleitet wird.

Dabei überlappen sich die o. g. Schutzfelder unterschiedlicher Größe und/oder Form z. B. zumindest zu einem Teil ihrer Fläche oder es ist bzw. sind zumindest ein oder mehrere der Schutzfelder unterschiedlicher Größe und/oder Form gar durch ein nächstgrößeres und/oder nächstbreiteres Schutzfeld gänzlich oder zumindest in der Breite und/oder nach oben hin, bevorzugt zumindest in der Breite und nach oben hin, betrachtet umfasst.

Hierbei werden insbesondere die von den beiden Scannern stammenden Scanbilder auf eine Schutzfeldverletzung in den voneinander verschiedenen - sich gegebenenfalls überschneidenden - Teilbereichen des jeweils betreffenden selben Schutzfeldes hin ausgewertet.

Bevorzugter Weise werden zur Überprüfung auf Schutzfeldverletzung Schutzfelder herangezogen, die in der überwachten Ebene E liegen und sich spiegelsymmetrisch zu einer - bzgl. der horizontalen Erstreckung in der Ebene - mittig zum Transportpfad liegenden Vertikalen zu beiden Seiten hin erstrecken. Diese Vertikale V verläuft z. B. in horizontaler Richtung der Ebene bzw. des Durchgangs betrachtet durch diejenige Stelle in der Ebene, durch welche eine bzgl. der Breite betrachtete Mittelpunkt des zu transportierenden Objektes, z. B. auf halber Länge der Symmetrieachse einer zu transportierenden Rolle oder der in Transportrichtung verlaufenden Mittelache eines zu transportierenden Behältnisses, während des Durchtretens dieses Objektes, z. B. Rolle oder Behältnisses, planmäßig verläuft. Dies ist beispielsweise durch Ausprägung eines Transportmittels und dessen mechanisch oder anderweitig vorgegebene Fahrroute definiert.

In einer insbesondere hierzu besonders zu bevorzugenden Vorrichtung ist ein Zugang in einen Sicherheitsbereich durch eine zwischen zwei den Sicherheitsbereich mechanisch begrenzenden Elementen vorgesehene Öffnung gebildet, wobei eine Überwachungssensorik zur Überwachung des Zugangs vorgesehen ist, welche zwei Scanner umfasst, deren Messstrahlen jeweils einen in einer selben, in der Öffnung verlaufenden liegenden Winkelbereich überstreichen. Zur Überwachung ist insbesondere ein Muster von Schutzfeldern mit mehreren Schutzfeldern unterschiedlicher Größe und/oder Form vorgesehen, von welchen zumindest ein oder mehrere durch ein nächstgrößeres und/oder nächstbreiteres Schutzfeld gänzlich oder zumindest in der Breite und/oder nach oben hin , bevorzugt zumindest in der Breite und nach oben hin, betrachtet umfasst ist bzw. sind, wobei Auswertemittel umfasst sind, durch welche für mehrere dieser Schutzfelder unterschiedlicher Größe und/oder Form die Scanbilder der beiden Scanner in voneinander verschiedenen, sich aneinander anschließenden oder ggf. überlappenden Teilbereichen der Ebene auf eine Schutzfeldverletzung der betreffenden Schutzfelder unterschiedlicher Größe und/oder Form hin überprüft werden und/oder überprüfbar sind.

Durch die Auswertemitte sind also insbesondere die Scanbilder der beiden Scanner auf eine Schutzfeldverletzung in den voneinander verschiedenen, also voneinander abweichenden Teilbereichen eines selben in der Ebene liegenden Schutzfeldes - bzw. jeweils selber Schutzfelder - hin prüfbar bzw. auswertbar.

Die Schutzfelder sind z. B. in der Weise vorgesehen, dass sie als Teilbereiche in der zu überwachenden Ebene beispielsweise durch Parametrierung in einer von den Scannern oder einer diesen verbundenen Datenverarbeitungsmitteln umfassten Software definiert sind. Sie sind bevorzugt - beispielsweise über änderbare Parameter - änderbar.

In einer besonders vorteilhaften Weiterbildung sind unterschiedliche Überwachungsfälle definiert bzw. definierbar, bei welchen für unterschiedliche Betriebssituationen, d. h. Klassen oder Arten von passierenden Objekten, voneinander verschiedene unterschiedliche Feldsätze, d. h. Muster von Schutzfeldern, zum Einsatz kommen. In zu bevorzugender Ausgestaltung dieser Weiterbildung erfolgt eine Erkennung und ggf. erforderliche Umschaltung automatisch nach vorgegebenen Regeln.

Ausführungsbeispiele der Erfindung sind in den Zeichnungen dargestellt und werden im Folgenden näher beschrieben.

### Es zeigen:

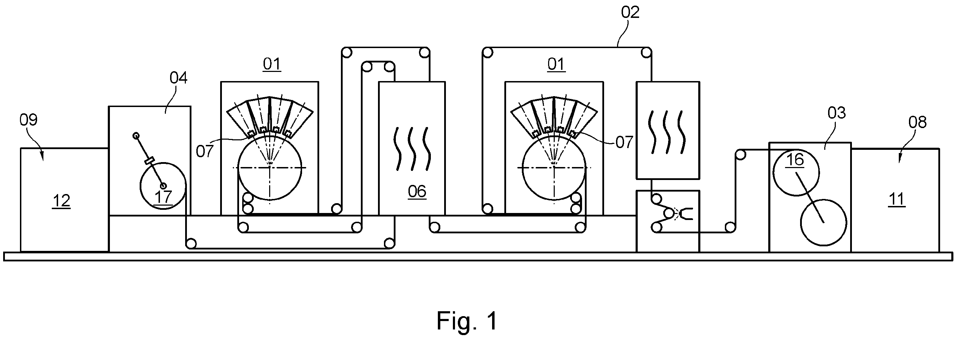

- Fig. 1: ein Ausführungsbeispiel für eine Druckmaschine mit Rollenab- und -aufwickler;
- Fig. 2: eine Draufsicht auf einen Sicherheitsbereich mit Zugang am Beispiel des Rollenaufwicklers;
- Fig. 3: eine Seitenansicht eines Sicherheitsbereichs vor einem Rollenaufwickler gemäß Fig. 2 mit Zugang;
- Fig. 4: eine Vorderansicht auf den Zugang in den Sicherheitsbereich mit schematisch gekennzeichneten Schutzfeldern eines ersten Beispiels für eine Schutzfeldstufung und exemplarischer schematischer Darstellung einer ersten Betriebsweise bzw. eines ersten Überwachungsfalls;
- Fig. 5: eine Vorderansicht auf den Zugang in den Sicherheitsbereich mit schematisch gekennzeichneten Schutzfeldern eines ersten Beispiels für eine Schutzfeldstufung und exemplarischer schematischer Darstellung einer zweiten Betriebsweise bzw. eines zweiten Überwachungsfalls;
- Fig. 6: eine schematische Darstellung von Schutzfeldern eines zweiten Beispiels für eine Schutzfeldstufung und exemplarischer schematischer Darstellung einer ersten Betriebsweise bzw. eines ersten Überwachungsfalls ;
- Fig. 7: eine schematische Darstellung von Schutzfeldern eines zweiten Beispiels für eine Schutzfeldstufung und exemplarischer schematischer Darstellung einer zweiten Betriebsweise bzw. eines zweiten Überwachungsfalls;
- Fig. 8: eine schematische Darstellung von Schutzfeldern einer Variante für eine Schutzfeldstufung in zweiter Betriebsweise bzw. im zweiten Überwachungsfall;
- Fig. 9: eine schematische Darstellung von Schutzfeldern einer zweiten Variante für eine Schutzfeldstufung in zweiter Betriebsweise bzw. im zweiten Überwachungsfall;
- Fig. 10: schematische Darstellungen a), b), c), d) und e) unterschiedlicher Sätze von Schutzfeldern in unterschiedlichen Betriebssituationen bzw. Überwachungsfällen.

Eine Druckmaschine, vorteilhaft ausgebildet als Rollendruckmaschine, umfasst ein oder mehrere Druckwerke 01, durch welches ein Bedruckstoff 02, z. B. eine Bedruckstoffbahn 02, nacheinander auf einer selben oder auf beiden Seiten bedruckbar, insbesondere im Inkjet-Verfahren bedruckbar ist, eine Bedruckstoffvorlage 03, z. B. einen Abwickler 03, beispielweise einen Rollenabwickler 03, insbesondere Rollenwechsler 03, eine nachgelagerte Produktaufnahme 04, z. B. einen Aufwickler 04, insbesondere einen Rollenaufwickler 04 , sowie vorzugsweise einen dem jeweiligen Druckwerk 01 im Bedruckstoffweg nachgeordneten Trockner 06. In bevorzugter Ausführung umfasst das Druckwerk 01 für den Mehrfarbendruck eine Mehrzahl von in Bedruckstofftransportrichtung hintereinander angeordneter Druckeinrichtungen 07, insbesondere Inkjet-Druckköpfen 07 mit jeweils einer oder mehreren Düsen zur gesteuerten Abgabe der Tinte.

Auf der Bedienseite des Rollenabwicklers 03 und/oder des Rollenaufwicklers 04, von welcher her im Fall des Rollenabwicklers 03 ein Bestücken mit einer neuen Rolle 16 und/oder die Entnahme einer leeren Hülse oder einer nicht vollständig abgelaufenen Rolle 16 und im Fall des Rollenaufwicklers 04 ein Bestücken mit einer Hülse und/oder die Entnahme einer fertig gestellten Rolle 17 erfolgt und/oder erfolgen kann, erstreckt sich z. B. über zumindest die Breite des Aufwicklers 04 ein Sicherheitsbereich 08; 09, welcher einerseits durch den Abwickler 03 bzw. Aufwickler 04 selbst sowie durch ein oder mehrere sich anschließende Aggregate und/oder mechanische Absperreinrichtungen 13 sowie durch ein oder mehrere sensorisch überwachte Zugänge 11; 12 im Wesentlichen derart vollständig eingegrenzt ist, so dass ein betriebsmäßiges Betreten durch Bedienpersonen und/oder eine Zu- oder Abfuhr von Rollen 16; 17 oder Hülsen lediglich über überwachte Zugänge 11; 12 erfolgen kann. Der Zugang 11; 12 ist dabei durch eine zwischen zwei den Sicherheitsbereich 08; 09 begrenzenden Elementen vorgesehene Öffnung gebildet.

Zusätzlich zu einem für den Rollen- und/oder Hülsendurchtritt vorgesehenen Zugang 11; 12 kann eine Zugangsmöglichkeit, z. B. eine bevorzugt sensorisch überwachte, Tür 14, insbesondere Schiebetür 14, vorgesehen sein, die es dem Bedienpersonal - bei Vorliegen eines bestimmten Maschinenzustandes - ermöglicht in den abgesicherten Bereich, d. h. den Sicherheitsbereich 08; 09, zu treten.

Für den Rollen- und/oder Hülsendurchtritt ist, bevorzugt auf einer zum Rollenabwickler 03 bzw. Rollenaufwickler 04 stirnseitigen Maschinenseite und/oder seitlich fluchtend zu einem Übernahmeplatz 19 vor dem Rollenabwickler 03 bzw. Rollenaufwickler 04, ein sensorüberwachter Zugang 11; 12 vorgesehen.

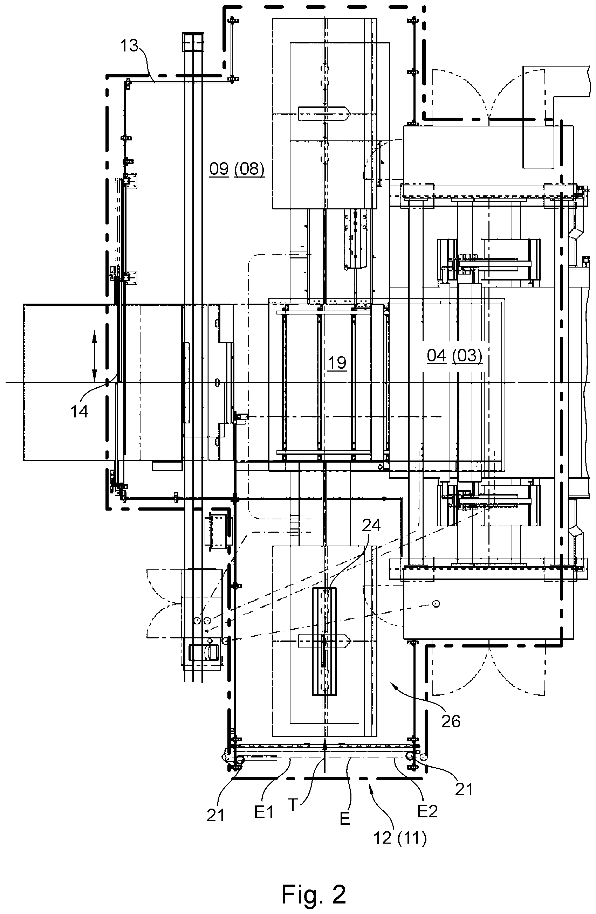

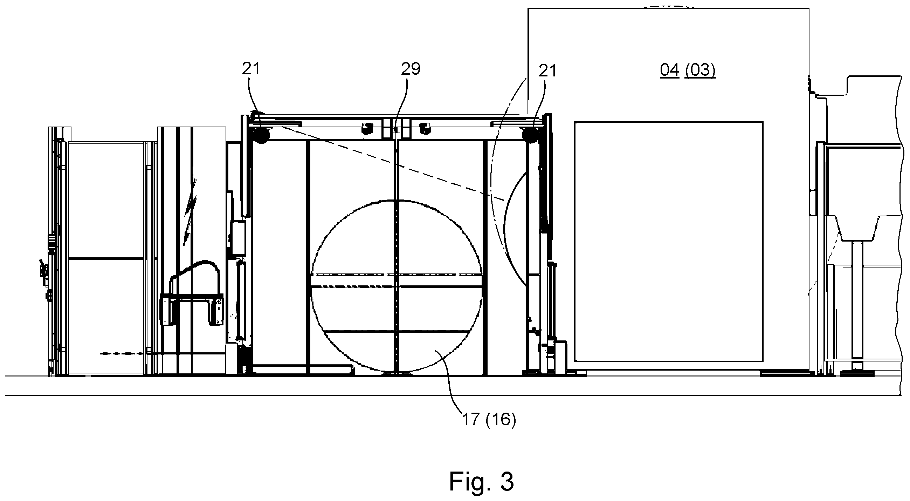

Im Folgenden und in den Figuren Fig. 2 und Fig. 3 ist ein solcher Sicherheitsbereich 09; 08 mit sensorisch überwachtem Zugang 12; 11 am Beispiel des Rollenaufwicklers 04 dargelegt, ist jedoch auf eine Ausführung eines stattdessen oder zusätzlich hierzu am Rollenabwickler 03 vorgesehenen Sicherheitsbereich 08 entsprechend zu übertragen. Die dem Rollenabwickler 03 entsprechend zugeordneten Bezugszeichen sind hierzu als Klammerausdrücke mitgeführt. Die erfindungsgemäße Lösung ist z. B. auch auf einen Rollenabwickler 03 einer Druckmaschine anzuwenden, in welcher eine abgewickelte Bedruckstoffbahn 02 vor dem einzigen oder ersten Druckwerk 01 in Bedruckstoffbogen geschnitten wird, welche anschließend dann bedruckt werden.

Der, vorzugsweise "stirnseitige", Zugang 12 (11) für den Durchtriff von Rollen 17 (16) und/oder Hülsen ist bevorzugt als offener Durchgang 12 (11) zur Bereichsabsicherung mit einer optisch wirksamen Überwachungssensorik ausgebildet, die den Zugang 12 (11), insbesondere im Bereich einer im Zugang 12 (11) liegende, bevorzugt horizontal verlaufende Ebene E, z. B. Überwachungsebene E, optisch überwacht. Die Überwachungsebene E steht dabei bevorzugt senkrecht auf einer beim Durchtritt der Rolle 17 (16) und/oder Hülle entlang eines Transportpfades vorliegenden Transportrichtung T. Der Transportpfad ist bevorzugter Weise mechanisch, beispielsweise durch eine Leiteinrichtung oder durch eine ein Transportmittel 24, z. B. Transportwagen 24, führende Führung 18, z. B. einer versenkt im Boden vorgesehene und dem Vortrieb des Transportwagens dienende Kettenführung, vorgegeben oder zumindest für den Fall eines freien, d. h. ungeführten Transportmittels 24 optisch oder in sonstiger Weise markiert.

Die Überwachungssensorik umfasst zwei als Scanner 21 ausgebildete Sensoren 21 sowie in diese und/oder in eine separate Auswerteeinrichtung implementierte Auswertemittel 23, durch welche das Scanergebnis, d. h. das jeweils aufgenommene Scanbild, auf hinterlegte und/oder hinterlegbare Kriterien und/oder Muster hin überprüfbar ist. Dabei sind die beiden Scanner 21 beiderseits des Transportpfades, insbesondere beiderseits einer in der Überwachungsebene E liegenden, und die Rollenachse von die Ebene E auf dem vorgesehenen Transportpfad transportierten Rollen 17 (16) schneidenden Vertikalen V vorgesehen. Bevorzugter Weise sind sie auf einer selben Höhe und/oder oberhalb der Oberseite einer transportierten Rolle 17 (16) maximal zu verwendenden Durchmessers Dₘₐₓ, z. B. oberhalb 1.800 mm über dem Boden, und/oder achssymmetrisch zur genannten Vertikale V angeordnet. Sie sind an beispielsweise einem Gestell 26, z. B. einem portalartigen Rahmen 26, derart angeordnet, sodass deren Mess- bzw. Scanstrahl einen in der Ebene E liegenden Winkelbereich überstreicht und/oder sie jeweils einen in der Ebene E liegenden Winkelbereich überwachen.

Zur Überwachung wird der Zugang 11; 12 durch die beiden Scanner 21 nun in einem Muster von Schutzfeldern M(Fj) mit - d. h. beispielsweise zumindest umfassend oder ggf. bestehend aus - mehreren Schutzfeldern Fj unterschiedlicher Größe und/oder Form überwacht, wobei jedoch für zumindest mehrere der Schutzfelder Fj unterschiedlicher Größe und/oder Form die Scanbilder der beiden Scanner 21 in voneinander verschiedenen, sich aneinander anschließenden oder überlappenden Teilbereichen E1; E2 der Ebene E auf eine - insbesondere gleichzeitige - Schutzfeldverletzung der betreffenden Schutzfelder Fj unterschiedlicher Größe und/oder Form hin überprüft werden, und wobei über eine Auswertung der in den beiden Teilbereichen gewonnenen Verletzungsmuster von verletzten Schutzfeldern Fj eine Information über die Zulässigkeit einer festgestellten Schutzfeldverletzung abgeleitet wird. Dabei kann die Gleichzeitigkeit beispielsweise in dem Sinne verstanden werden, dass zumindest elektrotechnische oder auswertungsbedingte Laufzeitunterschiede sowie ggf. eine relative Eintrittstoleranz, deren Grenzwert beispielsweise - ggf. abhängig von der vorliegenden oder systembedingten Betriebstransportgeschwindigkeit - bei einem Wert von höchstens einer Sekunde, bevorzugt höchstens 100 Millisekunden liegt, noch als gleichzeitig gewertet werden.

Die Auswertemittel 23, z. B. ein in einem Datenverarbeitungs- und Speichermittel vorgesehener Auswerteroutine, sind bzw. ist dazu ausgebildet, die durch die beiden Scanner 21 gelieferten Bilder in zwei unterschiedlichen, z. B. in Summe wenigstens den gesamten zu überwachenden bzw. überwachten Bereich abdeckenden Teilbereichen E1; E2 der Ebene E auf ein Eindringen eines Objektes in eines oder mehrere einer Anzahl k, z. B. k aus 4 bis 12, insbesondere aus 6 bis 10, vorgegebenen und/oder vorgebbaren und insbesondere zumindest zu einem Teil ineinander verschachtelter Schutzfelder Fj (j = 1, 2, 3 ...k), d. h. auf Verletzung von in der Ebene E liegenden definierten Flächenbereichen Fj, zu überwachen und dahingehend auszuwerten, ob bei Auftreten einer Störung, d. h. einer Schutzfeldverletzung, in wenigstens einem der Schutzfelder Fj, in den beiden auszuwertenden Teilbereichen E1; E2 lediglich ein oder mehrere selbe Schutzfelder Fj, d. h. ein selbes Verletzungsmuster oder Verletzungsmuster, die voneinander um lediglich eine definierbare Anzahl eines oder mehrerer nächstfolgend größeren und/oder breiteren Schutzfeldern Fj abweichen, d. h. auf der einen Seite bzw. im einen Teilbereich E1; E2 eines oder ggf. eine definierte Anzahl von - z. B. lückenlos bzw. stetig aufsteigend - nächstgrößeren (d. h. insbesondere das betreffende Schutzfeld Fj gänzlich oder zumindest in der Breite und/oder nach oben hin umfassenden) verletzten Schutzfeldern Fj als auf der anderen Seite bzw. dem anderen Teilbereich E2; E1. Bevorzugter Weise ist o. g. Toleranzgrenze mit der Anzahl Eins gegeben, d. h. es darf auf einer der Seiten bzw. in einem der Teilbereiche E1; E2 höchstens ein nächstgrößeres Schutzfeld Fj+1 verletzt sein als auf der anderen Seite bzw. im anderen Teilbereich E2; E1.

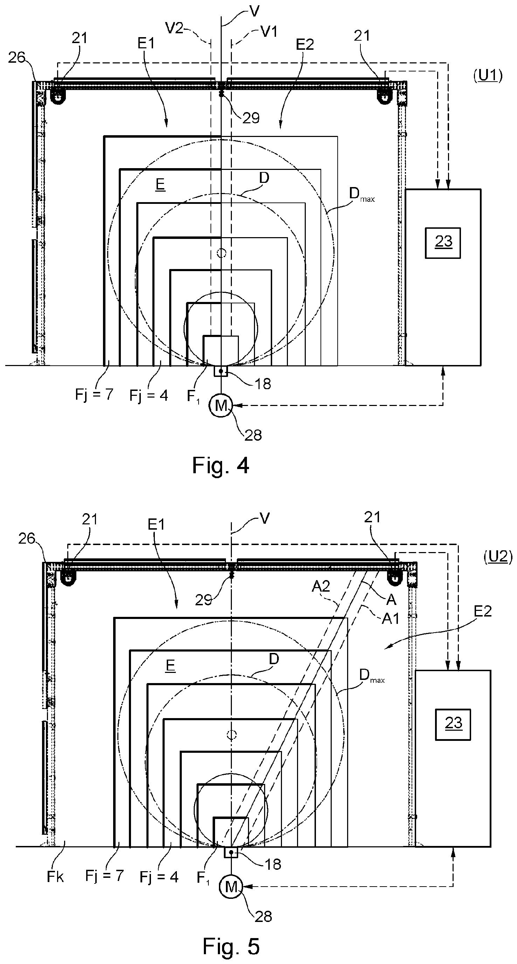

Unter Schutzfeldern Fj benachbarter Feldgrößen sollen z. B. zwei Schutzfelder Fj; Fj+1 verstanden sein, von welchen das größere oder zumindest breitere Schutzfeld Fj im Satz der vorliegenden Schutzfelder Fj das nächstgrößere bzw. nächstbreiteren Schutzfeld Fj darstellt und - zumindest was die Erstreckung in horizontaler Richtung und/oder nach oben hin betrifft - das kleinere und/oder schmalere der beiden Schutzfelder Fj-1 umfasst. Die zu betrachtenden Schutzfelder Fj erstrecken sich bevorzugt spiegelsymmetrisch zu o. g. Vertikalen V in der Ebene E. Die durch die beiden Scanner 21 auszuwertenden Teilbereiche E1; E2 der Schutzfelder Fj sind in den Darstellungen Fig. 4 bis Fig. 10 durch zwei unterschiedlich starke Begrenzungslinien hervorgehoben.

Der zu überwachende Bereich umfasst somit eine Anzahl k von zu überwachenden Schutzfeldern Fj, von denen zumindest mehrere mit gestaffelter Größe vom jeweils nächstgrößeren und/oder im obigen Sinne nächstbreiteren Schutzfeld Fj gänzlich oder zumindest in der Breite und/oder, insbesondere und, nach oben hin umfasst sind, wobei das größte bzw. breiteste der Schutzfelder Fj (mit j = k) beispielsweise durch den zu überwachenden Bereich gebildet ist und/oder sich von den Begrenzungen des Durchganges 12 (11) nach innen erstreckt und bevorzugt die übrigen Schutzfelder Fj - gänzlich oder zumindest in der Breite und/oder, insbesondere und, nach oben hin umfasst, und wobei z. B. ein erstes Schutzfeld F1 mit seinen Begrenzungen die Schutzfeldgrenzen der oder mehrerer der anderen Schutzfelder Fj schneidet und durch seine Formgebung in Abhängigkeit vom Vorliegen einer Feldverletzung Aufschluss über die Beschaffenheit und/oder Größe einer eintretenden Rolle 17 (16) liefet.

Die Überwachungssensorik ist bevorzugt derart ausgeführt, dass zumindest ein das Transportmittel 24 antreibendes Antriebsmittel 28, z. B. Motor 28, stoppt und/oder ein Warnsignal ausgegeben wird, wenn bei aktivierter Überwachung des Zuganges 12 (11) und ohne ein durch einen "erlaubten" Rollentransport bedingtes Muting eine Schutzbereichsverletzung festgestellt wird, z. B. eine Bedienperson unerlaubter Weise durch die Bereichsabsicherung bzw. überwachte Ebene E hindurch tritt. Dasselbe gilt für den Fall, dass zwar während eines Rollentransportes für den betreffenden Bereich ein Muting aktivieret ist, jedoch eine im obigen Sinne unsymmetrische Schutzfeldverletzung hinzutritt oder eine Verletzung des größten Schutzfeldes Fj (j = k) im Randbereich zum nächstkleineren Schutzfeld Fj erfolgt.

Zwischen einem Schaltzustand der Überwachungssensorik, in der jegliche Schutzfeldverletzung zu Sicherheitsmaßnahmen führt, und einem Schaltzustand, in welchem ein symmetrischer Eintritt zur Aktivierung der Muting-Funktion für einen entsprechenden Schutzfeldbereich führt und eine unsymmetrische Verletzung zur Aktivierung der Sicherheitsmaßnahmen führt, kann beispielsweise infolge eines Herannahens einer Rolle 17 (16) gewechselt werden. Das Herannahen kann beispielsweise durch am Transportpfad, insbesondere über dem Transportpfad beiderseits der Ebene E vorgesehener Sensoren 29, z. B. Näherungssensoren 29, insbesondere Näherungsschalter 29, erfolgen. Ist auch der zweite Sensor 29 durchlaufen, kann aus dem den Rollendurchtritt tolerierenden Schaltzustand wieder in den Schaltzustand zur Überwachung jeglicher Schutzfeldverletzungen gewechselt werden.

Erfolgt ein über die Bilder der jeweiligen Scanner 21 im für den betreffenden Scanner 21 auszuwertenden Teilbereich E1; E2 erkanntes Eindringen gleichzeitig in lediglich ein oder mehrere selbe Schutzfelder Fj, ggf. unter Berücksichtigung einer unten genannten Toleranz, so wird z. B. von einem Eintritt eines bzgl. der Vertikalen V achssymmetrischen Objektes ausgegangen, was beispielsweise eine auf einem Transportmittel 24 sitzende Rolle 17 (16), mit oder ohne einem sog. Adapter 27, d. h. einem z. B. ebenfalls symmetrischen Aufsatz 27, auf dem Transportwagen 24 für Rollen 17 (16) kleineren Durchmessers D, sein kann. Um jedoch aufgrund von beispielsweise Unrundheiten im Rollenwickel oder geringfügiger Lagefehler auf dem Transportwagen 24 und/oder Transportpfad begründete Fehldetektionen zu vermeiden, sind z. B. Toleranzbereiche bei der Auswertung der Störung vorgesehen. Dieser Toleranzbereich ist beispielsweise dadurch gegeben, dass eine Abweichung in der Verletzung zwischen den beiden Teilbereichen E1; E2 lediglich eine definierbare kleine Anzahl von Stufen, bevorzugt um lediglich eine Stufe, d. h. in einem Teilbereich E1; E2 eine zusätzliche Verletzung des nächstgrößeren Schutzfeld Fj im Vergleich zum anderen Teilbereich E2; E1, toleriert wird. In einer bzgl. der Sicherheit vorteilhaften Ausführung gilt dies jedoch nicht für einen Eintritt in den sich an die Begrenzungen des Durchgangs, beispielsweise das Gestell 26 oder einen Rahmen 26, nach innen anschließenden Bereich bis zum nächstkleineren der definierten bzw. definierbaren Schutzfelder Fj.

Bei einem gleichzeitigem Eintreten in lediglich ein oder mehrere selbe Schutzfelder Fj, ggf. unter Berücksichtigung einer o. g. Toleranz, wird für den Bereich der betroffenen Schutzfelder Fj bzw. für das kleinste betroffene, die übrigen gleichzeitig verletzten Schutzfelder Fj umfassende Schutzfeld Fj ein Auslösen von Sicherheitsmaßnahmen unterdrückt, d. h. eine sogenannte Muting-Funktion aktiviert, während für den außerhalb dessen liegenden Teil der durch die beiden Scanner 21 überwachten Ebene E die Überwachung insbesondere auf einen unsymmetrischen Eintritt eines Objektes in die Teilbereiche E1; E2 mit bei Verletzung, d. h. unsymmetrischem Eintritt, entsprechend auszulösenden Sicherheitsmaßnahmen, z. B. einer akustischen und/oder optischen Warnung und/oder einem Stillsetzen oder Blockieren des Rollentransportes, aufrecht erhalten bleibt.

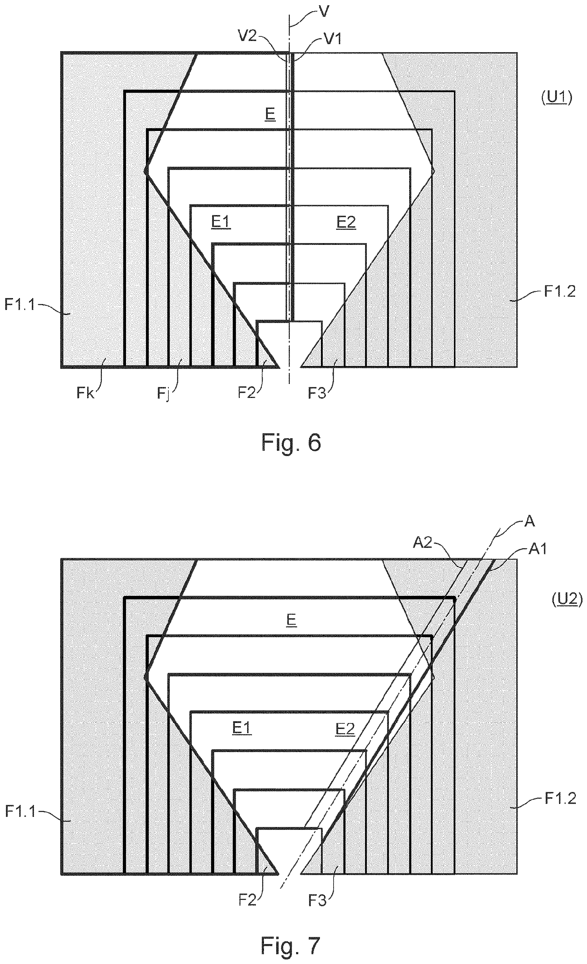

Die auszuwertenden Teilbereiche E1; E2 können sich in einer ersten Ausführung und/oder Betriebssituation, insbesondere in einem ersten Überwachungsfall Ui, mit i = 1, 2, 3, ..., spiegelsymmetrisch zu einer vertikalen Trennlinie V, insbesondere zu einer durch o. g. Vertikale V gegebene Trennlinie V, erstrecken. Sie können sich dabei von beiden Seiten kommend genau bis zur Vertikalen V erstrecken, jedoch zur Sicherheit auch geringfügig überlappen, so dass sich der eine Teilbereich E1; E2 bis zu einer jenseits der mittig zum Transportpfad liegenden, z. B. vertikal verlaufenden ersten Randlinie V1 und sich der andere Teilbereich E1 von der anderen Seite her bis zu einer jenseits der mittig zum Transportpfad liegenden Vertikalen V verlaufenden zweiten z. B. vertikal verlaufenden Randlinie V2 erstreckt. In dieser ersten Betriebsweise oder Ausführung bzw. diesem ersten Überwachungsfall U1 liegt ein sog. symmetrischer Feldsatz für die Auswertung der hierbei vorgesehenen, insbesondere symmetrisch zur Vertikalen gebildeten Schutzfelder Fj zugrunde (siehe z. B. Fig. 4 oder Fig. 6).

Diese symmetrische Messfeldauswertung kann jedoch ggf. dann problematisch sein, wenn ein oben auf der Rolle 17 (16) aufliegendes Objekt oder Lebewesen, ggf. im Rahmen vorliegender Toleranzen, einen gleichzeitigen Eintritt in z. B. ein, ggf. unter Berücksichtigung o. g. Toleranzen, größeres Schutzfeld Fj+1; Fj+2 liefern. Hier könnte fälschlicher Weise z. B. auf einen Durchmesserwechsel einer gestuft vorliegenden Rolle 17 (16), d. h. einer Rolle 17 (16) mit Abschnitten unterschiedlichen Durchmessers D, geschlossen werden. Zwischen dem Vorliegen einer gestuften Rolle 17 (16) und einem unzulässigen Eindringen eines in etwa symmetrischen Objektes oder Lebewesens auf der Rolle 17 (16) kann dann ggf. nicht unterschieden werden.

Um dies auszuschließen oder zumindest zu erschweren können in einer zweiten Ausführung und/oder Betriebssituation, insbesondere in einem zweiten Überwachungsfall U2; U2.1; U2.2, die auszuwertenden Teilbereiche E1; E2 der durch die beiden Scanner 21 gelieferten Bilder zur Vertikalen V unsymmetrisch sein und/oder die Grenze zwischen den Teilbereichen, z. B. um mindestens 20°, geneigt zur Vertikalen V verlaufen (siehe z. B. in Fig. 4 eine den überwachten Bereich asymmetrisch in auszuwertende Teilbereiche E1; E2 teilende Trennlinie A). Eine derartige asymmetrische Auswertung, auch als Betrieb bzw. Überwachungsfall U2; U2.1; U2.2 mit asymmetrischem Feldsatz bezeichnet, kommt vorzugsweise zumindest dann zur Anwendung, wenn - z. B. auch - gestufte Rollen 17 (16) zum Einsatz kommen sollen oder können, oder insbesondere dann, wenn beim Betrieb mit zunächst symmetrischer Auswertung, d. h. einem Betrieb mit symmetrischem Feldsatz in einem ersten Überwachungsfall U1, definierte Kriterien erfüllt sind für ein Umschalten in einen Betrieb mit asymmetrischer Auswertung, d. h. einen Betrieb mit asymmetrischem Feldsatz in einem zweiten Überwachungsfall U2; U2.1; U2.2.

In vorteilhafter Ausführung erfolgt - grundsätzlich unabhängig vom Betrieb im ersten oder zweiten o. g. Überwachungsfall U1; U2; U2.1; U2.2 - beim Auftreten von Durchmesserwechseln bei aufeinander folgenden Rollen 17 (16) oder auch bei Durchmesserwechseln innerhalb einer gestuften Rolle 17 (16) bei Auftreten einer gleichzeitigen Verletzung der ggf. unter Berücksichtigung obiger Toleranzen selben Schutzfelder Fj eine Bereichsumschaltung zwischen dem oder den bis zuletzt durch Muting freigestellten Schutzfeldern Fj, und dem oder den nach dem Auftreten eines Durchmesserwechsels durch Muting freizustellenden Schutzfeldern Fj. Dasselbe gilt für das Eintreten einer Rolle 17 (16) in die zuvor ohne Muting überwachte Ebene E. Es erfolgt also bevorzugt automatisiert durch die Auswertemittel 23 eine Generierung oder Anpassung, d. h. eine Verkleinerung oder Vergrößerung, des Bereichs mit unterdrückter Sicherheitsmaßnahme, sofern die über die beiden Scanner 21 in den ausgewerteten Teilbereichen E1; E2 erkannte Schutzfeldverletzung, gleichzeitig im selben Schutzfeld Fj oder unter Berücksichtigung obiger Toleranz in Schutzfeldern Fj aufeinander folgender Größe erfolgt.

Die Schutzfelder Fj eines Überwachungsfalles U1; U2; U2.1; U2.2 können in Anzahl, Größe, Staffelung und/oder Form für unterschiedliche Anwendungen, Rollentypen und/oder Rollengrößen variieren und - wie oben erwähnt - vorgebbar und in den Datenverarbeitungs- und Speichermitteln vorgehalten sein. Die Schutzfelder Fj liegen dabei bevorzugt in parametrierter Form vor und sind zur Änderung und/oder Erstellung über eine Schnittstelle zu den Auswertemitteln 23 parametrierbar. Für den Fall mehrerer, sich in Anzahl, Größe, Staffelung und/oder im Überwachungsfall unterscheidender Feldsätze sind diese ebenfalls hinterlegt und vorzugsweise parametrierbar.

So kann z. B. ein Muster von Schutzfeldern M(Fj) mit einer Mehrzahl, z. B. 3 bis 11, insbesondere 5 bis 9, hier bevorzugt 7 derart ineinander liegender Schutzfelder Fj vorgesehen sein, die - wie z. B. in Fig. 4 dargestellt - so angeordnet sind, dass die Schutzfelder Fj bis auf das größte dieser Mehrzahl von Schutzfeldern Fj jeweils vom nächstgrößeren Schutzfeld Fj+1 gänzlich oder zumindest in der Breite und/oder, bevorzugt und, nach oben hin umfasst sind. Dabei können ein Teil oder sämtlicher dieser Mehrzahl im unteren Bereich auf einer selben Höhe abschließen. Ggf. können ein oder mehrere breitere, also sich weiter nach außen ersteckende Schutzfelder Fj mit ihrer unteren Begrenzung auch - z. B- geringfügig - oberhalb der unteren Begrenzung des nächstkleineren Schutzfeldes Fj-1 abschließen. Zusätzlich kann ein weiteres, z. B. hier und in den Figuren Fig. 6 bis Fig. 10 als erstes Schutzfeld F1 bezeichnet, vorgesehen sein, welches nicht durch die anderen umfasst ist und einer Identifikation der Rollengröße und/oder -lage dient.

In erster Ausführung und/oder Betriebssituation bzw. dem ersten Überwachungsfall U1 liegt der Auswertung der durch die Scanner 21 ermittelten Bilder eine zur Vertikalen V symmetrische Teilung, ggf. mit Überlappungsbereich, zugrunde, während o. g. zweiter Ausführung und/oder Betriebssituation bzw. dem zweiten Überwachungsfall U2 der Auswertung der durch die Scanner 21 ermittelten Bilder eine bzgl. der Vertikalen V asymmetrische Teilung z. B. entlang einer geneigt zur Vertikalen V verlaufenden Trennlinie A, ggf. mit einem Überlappungsbereich zwischen zwei beidseitig zur Trennlinie A und z. B. auf einer selben Seite der Vertikalen V liegenden Randlinien A1; A2, zugrunde liegt.

In einer besonders zu bevorzugenden Ausgestaltung, in welcher ein Erkennen unterschiedlicher Betriebssituationen und ein ggf. erforderliches Umschalten in einen anderen Überwachungsfall Ui möglich ist, ist ein erstes, z. B. im bodennahen Bereich am weitesten innen liegendes Schutzfeld F1 nicht wie im Beispiel nach Fig. 4 und Fig. 5 von mehreren oder sämtlichen größeren Schutzfeldern Fj umfasst, sondern erstreckt sich in der Ebene E von beiden Seiten des zu überwachenden Durchganges 12 (11) zu je einer Feldgrenze, die zur Vertikalen V spiegelsymmetrisch verlaufen und/oder zwischen sich einen zur Vertikalen V symmetrischen, nicht dem ersten Schutzfeld Fj zuzurechnenden, insbesondere zu beiden Seiten hin konvex geformten oder sich nach oben stetig öffnenden, Flächenbereich begrenzen (siehe z. B. Fig. 6 bis Fig. 10). Die beiden seitlichen Feldteile F1.1; F1.2 des ersten Schutzfeldes F1 (in Fig. 6 bis Fig. 10 zum besseren Verständnis schattiert dargestellt) können im Bereich des oberen und/oder unteren Randes miteinander verbunden sein oder aber, wie dargestellt, zwei Teile F1.1; F1.2 eines zweiteiligen ersten Schutzfeldes F1 bilden.

In einer Variante hierzu kann das erste Schutzfeld F1 auch genau umgekehrt definiert sein, wobei dieses dann durch den innenliegenden symmetrischen Bereich (nicht schattiert) gebildet ist und eine an einer Verletzung/Nichtverletzung des ersten Schutzfeldes F1 festgemachte Schaltlogik (siehe unten) dann genau umgekehrt definiert sein sollte.

Die Feldgrenze(n) des ersten Schutzfeldes Fj laufen im unteren Randbereich der überwachten Ebene E zusammen oder enden im unteren Randbereich innerhalb der Grenzen eines kleinsten Schutzfeldes Fj einer Gruppe von Schutzfelder Fj, von welchen das jeweilige Schutzfeld Fj - gänzlich oder zumindest was die Erstreckung in horizontaler Richtung und/oder, bevorzugt und nach oben hin betrifft - vom jeweils nächstgrößeren und/oder nächstbreiteren Schutzfeld Fj+1 der Gruppe umfasst ist. Ausgehend vom unteren Randbereich laufen die Feldgrenzen des ersten Feldes F1 (F1.1, F1.2) beidseitig der Vertikalen V derart auseinander, sodass sie die, insbesondere seitlichen, Grenzen mehrerer, z. B. zumindest der beiden innersten der Gruppe von ineinander liegende/n Schutzfeldern Fj, schneiden und/oder den zwischen sich ausgebildeten Flächenbereich verbreitern.

In einer vorteilhaften Ausgestaltung erstreckt sich das erste Schutzfeld F1 bis an den oberen Rand des zu überwachenden Bereichs der Ebene E und schneidet die äußere Begrenzung aller übrigen Schutzfelder Fj. In einer vorteilhaften Ausführung laufen die beiden seitlichen Feldgrenzen des ersten Schutzfeldes F1 ab einer Höhe, die zumindest der halben Höhe einer auf dem Transportmittel 24 durch den Durchgang transportierten Rolle 17 (15) maximalen Durchmessers Dₘₐₓ entspricht, wieder symmetrisch aufeinander zu und bilden hierdurch o. g. konvexe Form der dazwischen liegenden Fläche aus.

Der Verlauf der beidseitigen Feldbegrenzung dieses ersten Schutzfeldes F1 kann stetig gekrümmt sein und/oder polygonartig, also abschnittsweise durch eine Anzahl, hier z. B. jeweils zwei, einander fortsetzende Geraden definiert sein. Letzteres ist beispielsweise in Bezug auf eine einfache Parametrierung von Vorteil siehe z. B. Fig. 6 und Fig. 7).

Für den jeweiligen, z. B. den symmetrischen und/oder den asymmetrischen, Überwachungsfall U1; U2, können zwei oder mehr Varianten eines o. g. Überwachungsfalls U1; U2, z. B. mehrere sich unterscheidende zweite Überwachungsfälle U2.1; U2.2, vorgesehen bzw. vorgehalten sein, die bzgl. der Auswertung zwar demselben Symmetrietyp unterliegen, deren Satz von Schutzfeldern Fj sich in Anzahl, Größe, Staffelung und/oder Form jedoch unterscheiden, und zwischen welche in vorteilhafter Ausführung ein, insbesondere automatisches, Umschalten erfolgt bzw. erfolgen kann.

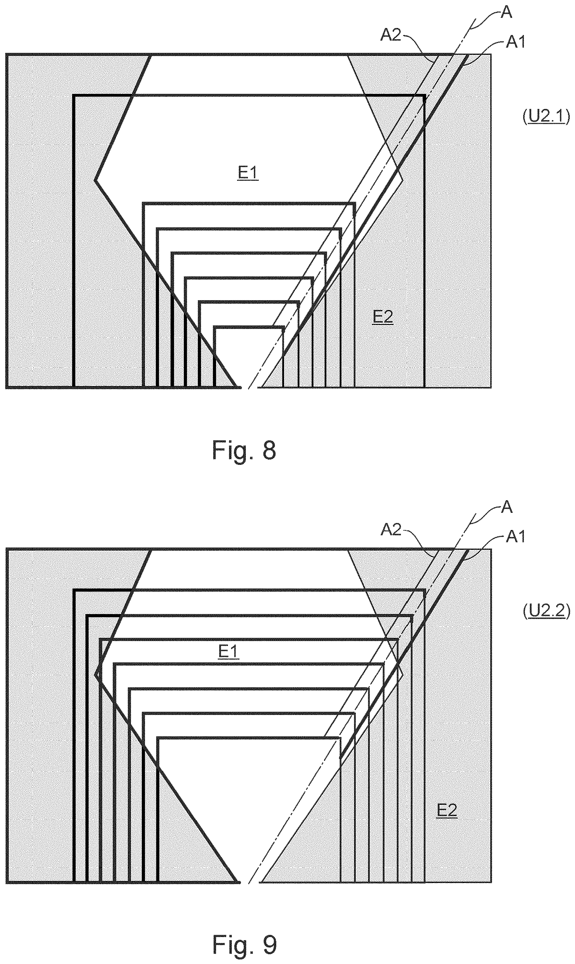

So können in einer vorteilhaften Ausführung zwei Überwachungsfälle U2.1; U2.2 mit asymmetrischem Feldsatz vorgesehen sein, einer zur Anwendung bei kleineren Rollen 17 (16) mit weiter innen und unten liegender Konzentration der Feldgrenzen siehe z. B. Fig. 8) und einer zur Anwendung bei größeren Rollen 17 (16) mit weiter oben und außen liegender Konzentration der Feldgrenzen (siehe z. B. Fig. 9).

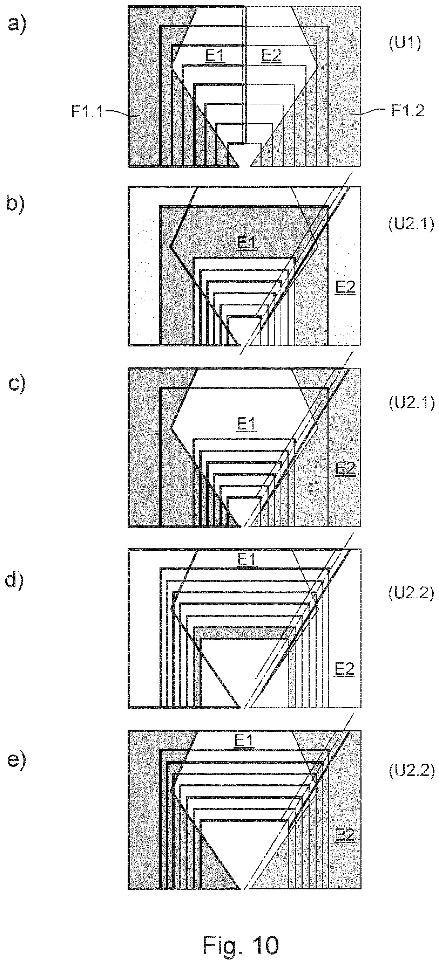

Im Folgenden wird eine besonders bevorzugte Vorgehensweise bei der Überwachung, insbesondere zur Steuerung der Überwachung dargelegt:
In einem Grundzustand, d. h. bevor ein zu transferierendes Objekt, z. B. eine Rolle 17 (16), Transportmittel 24 oder Behältnis, überhaupt ein Schutzfeld Fj der Überwachungsebene E verletzt, befindet sich das Überwachungssystem in einem ersten Überwachungsfall U1, in welchem in obigem Sinne ein symmetrischer Feldsatz vorliegt bzw. die Auswertung symmetrischer Teilbereiche E1; E2 auf Feldverletzung erfolgt (siehe z. B. Teilbild a)) in Fig. 10).

Erfolgt eine Feldverletzung im Bereich zwischen den Feldgrenzen des größten, sich von den Begrenzungen des Durchgangs 12 (11) her nach innen erstrechenden Schutzfeldes Fk, und des nächstkleineren Schutzfeldes Fj, im Folgenden auch als Randbereich bezeichnet, so werden in jedem Fall, d. h. unabhängig von ggf. vorliegenden zusätzlichen Schutzfeldverletzungen, o. g. Sicherheitsmaßnahmen ausgelöst. Wird in diesem Randbereich eine Schutzrechtverletzung registriert, so wird vom Eintritt einer Person oder eines unzulässig großen Objektes ausgegangen.

Erfolgt - bei unverletztem Randbereich - eine Verletzung eines oder mehrerer vom ersten, die o. g. seitlichen Feldteile F1.1; F1.2 symmetrisch umfassenden Schutzfeld F1 verschiedenen Schutzfeldes Fj bzw. Schutzfelder Fj, ohne jedoch auch das erste Schutzfeld F1 mit zu verletzen, so erfolgt Betrieb im ersten Überwachungsfall U1 oder wird ein solcher beibehalten. Dabei wird beispielsweise vom Durchtritt eines Rollenabschnittes einer gestuften Rolle 17 (16) ausgegangen.

Wird aus dem Grundzustand kommend oder im ersten Überwachungsfall U1, d. h. mit symmetrischem Feldsatz, eine Feldverletzung des ersten Feldes F1 (F1.1, F1.2) festgestellt, so wird in einen zweiten Überwachungsfall U2 umgeschaltet, d. h. in eine Überwachung mit in obigem Sinne asymmetrischem Feldsatz bzw. einer Auswertung asymmetrischer Teilbereiche E1; E2 auf Feldverletzung. In dieser Überwachungsart ist mit größerer Sicherheit ein auf der Rolle 17 (16) befindliches Objekt oder Lebewesen erkennbar.

Wie oben dargelegt, können für einen übergeordneten Überwachungsfall U1; U2 zwei oder mehr zweite Überwachungsfälle U2 vorgesehen sein, nämlich eine erste Variante U2.1 des zweiten Überwachungsfalles U2 zur Anwendung bei Rollen 17 (16) mit einem gegenüber einem Grenzdurchmesser kleineren Durchmesser D und eine zweite Variante U2.2 des zweiten Überwachungsfalles U2 zur Anwendung bei Rollen 17 (16) mit einem gegenüber einem Grenzdurchmesser größeren Durchmesser D. Der Grenzdurchmesser kann der einen oder anderen variante zugeschlagen sein. Für diesen Fall zweier Varianten U2.1; U2.2 wird beim Umschalten vom ersten auf den zweiten Überwachungsfall U1; U2; U2.1; U2.2 bevorzugt zunächst in diejenige Variante U2.1 für kleinere Rollendurchmesser D umgeschaltet (siehe z. B. Fig. 8 und Fig. 10b)).

Wird in der Weiterbildung mit zwei Varianten U2.1; U2.2 für den zweiten Überwachungsfall U2 beim Betrieb in der ersten Variante U2.1 für den zweiten Überwachungsfall U2 neben demgegenüber kleineren Schutzfeldern Fj auch das zweitgrößte Schutzfeld Fj bzw. das benachbart zum Randbereich innen liegende Schutzfeld Fj verletzt, so wird auf die zweite Variante U2.2 für den zweiten Überwachungsfall U2 umgeschaltet. Dabei wird angenommen, dass es sich um eine große Rolle 17 (16) handelt und z. B. unter Beibehaltung der Feldanzahl eine feinere Stufung im weiter außen liegenden Bereich der Überwachungsebene E von Vorteil ist (siehe z. B. Fig. 9).

Wird in der Weiterbildung mit zwei Varianten U2.1; U2.2 für den zweiten Überwachungsfall U2 beim Betrieb in der zweiten Variante U2.2 für den zweiten Überwachungsfall U2 neben dem ersten Schutzfeld F1 auch das innerste von mehreren jeweils vom nächstgrößeren Schutzfeld Fj+1 umfassten Schutzfeldern Fj nicht mehr verletzt, jedoch ein oder mehrere größere Schutzfelder Fj weiterhin verletzt, wird auf die erste Variante U2.1 des zweiten Überwachungsfalls U2 umgeschaltet. (siehe z. B. Fig. 8 oder Fig. 10b)).

Wenn beim Betrieb im zweiten Überwachungsfall U2 oder einer seiner Varianten U2.1; U2.2 und unverletztem Randbereich das erste Schutzfeld F1 nicht mehr verletzt ist, jedoch eines oder mehrere innerhalb des Randbereichs liegender Schutzfelder Fj verletzt ist bzw. sind, wird in den ersten Überwachungsfall U1 umgeschaltet, d. h. in den Betrieb mit symmetrischem Feldsatz bzw. eine Auswertung symmetrischer Teilbereiche E1; E2 auf Feldverletzung (siehe z. B. Fig. 6 oder Fig. 10 a)).

Grundsätzlich ist ein erlaubtes Durchfahren des überwachten Durchgangs bzw. die Aktivierung einer o. g. Mutingfunktion, d. h. einer Überwachung mit einer von bestimmten Kriterien abhängigen Toleranz von Schutzfeldverletzungen, nur möglich, wenn eine o. g. Verletzung lediglich selber Schutzfelder Fj oder allenfalls eine Verletzung von Schutzfeldern Fj benachbarter Größe in den beiden Teilbereichen E1; E2 festgestellt wird. Vorzugsweise gilt weiter als Bedingung für die Aktivierung einer o. g. Mutingfunktion, dass das Transportmittel 24 auf der den Durchtritt durch den Durchgang 12 (11) betreffenden Transportstrecke antreibende Antriebsmittel 28 aktiv ist und/oder dass das Ausgangssignal des in Transportrichtung T vor dem Eintritt in die Überwachungsebene E liegenden Sensors 29 den Durchtritt eines Objektes liefert, bevor innerhalb eines definierten Zeitfensters eine Verletzung eines der Schutzfelder Fj erfolgt und/oder dass das Ausgangssignal des in Transportrichtung T hinter der Überwachungsebene E liegenden Sensors 29 erst dann den Durchtritt eines Objektes liefert, nachdem innerhalb eines definierten Zeitfensters eine Verletzung eines der Schutzfelder Fj erfolgt ist und/oder der vor dem Eintritt in die Überwachungsebene E liegenden Sensors 29 den Durchtritt eines Objektes geliefert hat.

### Bezugszeichenliste

- 01: Druckwerk
- 02: Bedruckstoff, Bedruckstoffbahn
- 03: Bedruckstoffvorlage, Abwickler, Rollenabwickler, Rollenwechsler
- 04: Produktaufnahme, Aufwickler, Rollenaufwickler
- 05: -
- 06: Trockner
- 07: Druckeinrichtung, Inkjet-Druckkopf
- 08: Sicherheitsbereich
- 09: Sicherheitsbereich
- 10: -
- 11: Zugang, Durchgang
- 12: Zugang, Durchgang
- 13: Absperreinrichtung
- 14: Tür, Schiebetür
- 15: -
- 16: Rolle
- 17: Rolle
- 18: Führung
- 19: Übernahmeplatz
- 20: -
- 21: Sensor, Scanner, Flächenscanner
- 22: -
- 23: Auswertemittel
- 24: Transportmittel, Transportwagen
- 25: -
- 26: Gestell, Rahmen
- 27: Adapter, Aufsatz
- 28: Antriebsmittel, Motor
- 29: Sensor, Näherungssensor, Näherungsschalter

- A: Trennlinie, asymmetrisch
- A1: Randlinie
- A2: Randlinie

- D: Durchmesser
- Dₘₐₓ: Durchmesser, maximal

- E: Ebene, Überwachungsebene
- E1: Teilbereich (E)
- E2: Teilbereich (E)

- Fj: Schutzfeld, Flächenbereich, mit (j = 1, 2, 3...k)

- T: Transportrichtung

- U1: Überwachungsfall, erster
- U2: Überwachungsfall, zweiter
- U2.1: Variante (U2)
- U2.2: Variante (U2)

- V: Vertikale, Trennlinie, symmetrisch
- V1: Randlinie
- V2: Randlinie

## Patentansprüche

1. Verfahren zur Überwachung eines in einen Sicherheitsbereich (08; 09) eines Rollenab- oder -aufwicklers führenden Zuganges (11; 12), durch welchen Rollen (16; 17) entlang eines Transportpfades hinein- und/oder heraustransportierbar sind, wobei der Zugang (11; 12) durch eine zwischen zwei den Sicherheitsbereich (08; 09) mechanisch begrenzenden Elementen vorgesehene Öffnung gebildet ist, und wobei der Zugang (11; 12) durch eine Überwachungssensorik eines Überwachungssystems überwacht wird, wobei zwei von der Überwachungssensorik umfasste Scanner (21) mit ihren jeweiligen Messstrahlen jeweils einen in einer selben, in der Öffnung verlaufenden Ebene (E) liegenden Winkelbereich überstreichen, **dadurch gekennzeichnet, dass** der Zugang (11; 12) in einem Muster von Schutzfeldern M(Fj) mit mehreren Schutzfeldern (Fj) unterschiedlicher Größe und/oder Form überwacht wird, dass mehrere der Schutzfelder (Fj) unterschiedlicher Größe und/oder Form jeweils durch ein nächstgrößeres und/oder nächstbreiteres Schutzfeld gänzlich oder zumindest in der Breite und nach oben hin betrachtet umfasst sind, dass für mehrere dieser Schutzfelder (Fj) unterschiedlicher Größe und/oder Form die Scanbilder der beiden Scanner (21) in voneinander verschiedenen, sich aneinander anschließenden oder überlappenden Teilbereichen (E1; E2) der Ebene (E) auf eine Schutzfeldverletzung der betreffenden Schutzfelder (Fj) unterschiedlicher Größe und/oder Form hin überprüft werden, und über eine Auswertung der in den beiden Teilbereichen gewonnenen Verletzungsmuster von verletzten Schutzfeldern (Fj) eine Information über die Zulässigkeit einer festgestellten Schutzfeldverletzung abgeleitet wird.

2. Verfahren nach Anspruch 1, **dadurch gekennzeichnet, dass** die von den beiden Scannern (21) stammenden Scanbilder auf eine Schutzfeldverletzung in den voneinander verschiedenen Teilbereichen (E1; E2) des jeweils betreffenden selben Schutzfeldes (Fj) hin ausgewertet werden und/oder dass zur Überprüfung auf Schutzfeldverletzung Schutzfelder (Fj) herangezogen werden, die sich in der Ebene (E) spiegelsymmetrisch zu einer den Transportpfad in der Ebene (E) mittig schneidenden Vertikalen (V) erstrecken.

3. Verfahren nach Anspruch 1 oder 2, **dadurch gekennzeichnet, dass** Auswertemittel (23) die durch die beiden Scanner (21) gelieferten Scanbilder in den beiden unterschiedlichen, jedoch in Summe wenigstens den gesamten überwachten Bereich abdeckenden Teilbereichen der Ebene (E) auf ein Eindringen eines Objektes in eines oder mehrere der Schutzfelder (Fj) unterschiedlicher Größe und/oder Form überwachen und dahingehend auswerten, ob bei Auftreten einer Störung, d. h. einer Schutzfeldverletzung in wenigstens einem der Schutzfelder (Fj), über die Scanbilder der beiden Scanner (21) selbe Verletzungsmuster über die zu betrachtenden Schutzfelder (Fj) festgestellt werden oder Verletzungsmuster, die voneinander um lediglich eine definierbare Anzahl von nächstfolgend größeren Schutzfeldern (Fj) bzw. breiteren und/oder höheren Schutzfeldern (Fj) abweichen.

4. Verfahren nach Anspruch 1, 2 oder 3, **dadurch gekennzeichnet, dass** die auf eine Feldverletzung hin ausgewerteten Teilbereiche (E1; E2) in zumindest einer Betriebssituation und/oder einem ersten Überwachungsfall (U1) symmetrisch und/oder in zumindest einer Betriebssituation und/oder einem zweiten Überwachungsfall (U2; U2.1; U2.2) asymmetrisch zu einer Vertikalen (V) liegen, die in der Ebene (E) verläuft und den durch den Durchgang führenden Transportpfad quer zur Transportrichtung betrachtet mittig schneidet.

5. Verfahren nach Anspruch 4, **dadurch gekennzeichnet, dass** ein Umschalten zwischen dem ersten und dem zweiten Überwachungsfall (U2; U2.1; U2.2) oder einer von mehreren Varianten (U2.1; U2.2) des zweiten Überwachungsfalls (U2) in Abhängigkeit vom Eintritt einer Feldverletzung eines ersten Schutzfeldes (F1; F1.1; F1.2) der Mehrzahl von Schutzfeldern (Fj) erfolgt, wobei
- die Überwachung im Vorfeld des Durchtrittes einer zu transferierenden Rolle (16; 17) im ersten Überwachungsfall (U1) erfolgt,
- bei Feststellung einer Feldverletzung des ersten Feldes (F1; F1.1, F1.2) in einen zweiten Überwachungsfall (U2; U2.1; U2.2) umgeschaltet wird,
- die Überwachung beim Betrieb im zweiten Überwachungsfall (U2) oder einer seiner Varianten (U2.1; U2.2) für den Fall, dass das erste Schutzfeld (F1) nicht mehr verletzt ist, jedoch eines oder mehrere der übrigen Schutzfelder (Fj) verletzt ist bzw. sind, in den ersten Überwachungsfall (U1) umgeschaltet wird.

6. Verfahren nach Anspruch 1, 2, 3, 4 oder 5, **dadurch gekennzeichnet, dass** der Zugang (11; 12) in einem Muster von Schutzfeldern M(Fj) überwacht wird, welches wenigstens ein Schutzfeld (Fj) umfasst, das so angeordnet und ausgebildet ist, dass es zumindest in seiner Breite und/oder nach oben hin vom nächstgrößeren Schutzfeld (Fj+1) umfasst ist und/oder in einem Muster von Schutzfeldern M(Fj) aus einer Anzahl k von Schutzfeldern (Fj), welches in der Anzahl k von Schutzfeldern (Fj) eine Mehrzahl ineinander derart verschachtelter Schutzfelder (Fj) umfasst, dass ein jeweiliges Schutzfeld (Fj) dieser Mehrzahl jeweils gänzlich oder zumindest in seiner Breite und/oder nach oben hin von einem nächstgrößeren Schutzfeld (Fj+1) umfasst ist, und/oder dass eine Überwachung des Durchgangs (11, 12) in 4 bis 12 Schutzfeldstufungen erfolgt und/oder unter Anwendung einer Mehrzahl von 3 bis 11 ineinander derart verschachtelter Schutzfelder (Fj), dass ein jeweiliges Schutzfeld (Fj) dieser Mehrzahl jeweils gänzlich oder zumindest in seiner Breite und/oder nach oben hin von einem nächstgrößeren bzw. nächstbreiteren und/oder -höher endendenden Schutzfeld (Fj+1) umfasst ist.

7. Verfahren nach Anspruch 1, 2, 3, 4, 5 oder 6, **dadurch gekennzeichnet, dass** für den Fall, dass während eines Durchganges eines Objektes (16; 17) für die beiden Teilbereiche (E1; E2) über die Scanbilder der beiden Scanner (21) selbe Verletzungsmuster über die zu betrachtenden Schutzfelder (Fj) festgestellt werden oder Verletzungsmuster, die voneinander um lediglich eine definierbare Anzahl von nächstfolgend größeren und/oder breiteren Schutzfeldern (Fj) abweichen, für das oder die von der Verletzung betroffenen Schutzfelder (Fj) ein Auslösen von Sicherheitsmaßnahmen unterdrückt, d. h. eine sogenannte Muting-Funktion aktiviert wird, und bei einer darüber hinausgehenden Abweichung in den beiden festgestellten Verletzungsmustern eine Sicherheitsmaßnahme eingeleitet wird.

8. Vorrichtung zur Überwachung eines in einen Sicherheitsbereich (08; 09) eines Rollenab- oder -aufwicklers (03; 04) führenden Zuganges (11; 12), durch welchen Rollen (16; 17) hinein- und/oder heraustransportierbar sind, insbesondere zur Durchführung des Verfahrens nach einem der Ansprüche 1 bis 7 wobei der Zugang (11; 12) durch eine zwischen zwei den Sicherheitsbereich (08; 09) mechanisch begrenzenden Elementen vorgesehene Öffnung gebildet ist, und wobei eine Überwachungssensorik zur Überwachung des Zugangs (11; 12) vorgesehen ist, wobei die Überwachungssensorik zwei Scanner (21) umfasst, deren Messstrahlen jeweils einen in einer selben, in der Öffnung verlaufenden Ebene (E) liegenden Winkelbereich überstreichen, **dadurch gekennzeichnet, dass** zur Überwachung des Zugang (11; 12) ein Muster von Schutzfeldern M(Fj) mit mehreren Schutzfeldern (Fj) unterschiedlicher Größe und/oder Form vorgesehen sind, von welchen mehrere durch jeweils ein nächstgrößeres und/oder nächstbreiteres Schutzfeld gänzlich oder zumindest in der Breite und nach oben hin betrachtet umfasst ist bzw. sind, und dass Auswertemittel (23) umfasst sind, durch welche für mehrere dieser Schutzfelder (Fj) unterschiedlicher Größe und/oder Form die Scanbilder der beiden Scanner (21) in voneinander verschiedenen, sich aneinander anschließenden oder überlappenden Teilbereichen (E1; E2) der Ebene (E) auf eine Schutzfeldverletzung der betreffenden Schutzfelder (Fj) unterschiedlicher Größe und/oder Form hin überprüft werden und/oder überprüfbar sind.

9. Vorrichtung nach Anspruch 8, **dadurch gekennzeichnet, dass** durch die Auswertemittel (23) die Scanbilder der beiden Scanner (21) auf eine Schutzfeldverletzung in den voneinander verschiedenen Teilbereichen des jeweils selben in der Ebene (E) liegenden Schutzfeldes (Fj) hin auswertbar sind und/oder über eine Auswertung der in den beiden Teilbereichen gewonnenen Verletzungsmuster von verletzten Schutzfeldern (Fj) eine Information über die Zulässigkeit einer festgestellten Schutzfeldverletzung ableitbar ist.

10. Vorrichtung nach Anspruch 8 oder 9, **dadurch gekennzeichnet, dass** die beiden Scanner (21) beiderseits des Transportpfades angeordnet sind und/oder auf einer selben Höhe und/oder oberhalb der Oberseite einer transportierten Rolle (16; 17) maximal zu verwendenden Durchmessers (Dₘₐₓ) angeordnet sind und/oder achssymmetrisch zu einer Vertikale (V) angeordnet sind, die in der Überwachungsebene (E) verläuft und mittig zum durch den Durchgang führenden Transportpfad liegt.

11. Vorrichtung nach Anspruch 8, 9 oder 10, **dadurch gekennzeichnet, dass** die oder mehrere der zur Überprüfung auf Schutzfeldverletzung herangezogenen Schutzfelder (Fj) sich in der Ebene (E) spiegelsymmetrisch zu einer den Transportpfad in der Ebene (E) mittig scheidenden Vertikalen (V) erstrecken.

12. Vorrichtung nach Anspruch 11, **dadurch gekennzeichnet, dass** ein erstes Schutzfeld (F1) derart vorgesehen ist, dass es zumindest ein kleinstes der ineinander liegenden Schutzfelder (Fj) partiell überschneidet und/oder dass es sich in der Ebene (E) von beiden Seiten des zu überwachenden Durchganges (11; 12) her zu je einer Feldgrenze erstreckt, die zwischen sich einen zu einer Vertikalen (V) symmetrischen, nicht dem ersten Schutzfeld (F1) zuzurechnenden Flächenbereich begrenzen.

13. Vorrichtung nach Anspruch 8, 9, 10, 11 oder 12, **dadurch gekennzeichnet, dass** die Auswertemittel (23) eingerichtet sind, die durch die beiden Scanner (21) gelieferten Scanbilder in den beiden unterschiedlichen, jedoch in Summe wenigstens den gesamten überwachten Bereich abdeckenden Teilbereichen der Ebene (E) auf ein Eindringen eines Objektes in eines oder mehrere der Schutzfelder (Fj) unterschiedlicher Größe und/oder Form zu überwachen und dahingehend auszuwerten, ob bei Auftreten einer Störung, d. h. einer Schutzfeldverletzung in wenigstens einem der Schutzfelder (Fj), über die Scanbilder der beiden Scanner (21) selbe Verletzungsmuster über die zu betrachtenden Schutzfelder (Fj) festgestellt werden oder Verletzungsmuster, die voneinander um lediglich eine definierbare Anzahl von nächstfolgend größeren und/oder breiteren Schutzfeldern (Fj) abweichen.

14. Druckmaschine mit einem Rollenabwickler (03), von welchem bahnförmiger Bedruckstoff (02) abwickelbar ist und/oder einem Rollenaufwickler (04), auf welchen zuvor bedruckter bahnförmiger Bedruckstoff (02) aufwickelbar ist, und mit einem Druckwerk (01), wobei sich auf zumindest der Bedienseite des Abwicklers (03) und/oder Aufwicklers (04) ein Sicherheitsbereich (08; 09) erstreckt, welcher durch den Ab- bzw. Aufwickler (03; 04) selbst sowie durch ein oder mehrere sich anschließende Aggregate und/oder mechanische Absperreinrichtungen (13) eingegrenzt ist und mindestens einen ersten sensorisch überwachten Zugang (11; 12) umfasst, durch welchen Rollen (16; 17) in den Sicherheitsbereich (08; 09) hinein- und/oder heraustransportierbar sind, **gekennzeichnet durch** eine Vorrichtung gemäß einem der Ansprüche 8 bis 13.

15. Druckmaschine nach Anspruch 14, **dadurch gekennzeichnet, dass** das Druckwerk (01) als ein nach einem druckformlosen Druckverfahren arbeitendes und/oder als Inkjet-Druckköpfe aufweisendes Druckwerk (01) ausgebildet ist.

## Claims

1. Method for monitoring an access point (11; 12) leading into a safety zone (08; 09) of a roll unwinder or winder, through which rolls (16; 17) can be transported in and/or out along a transport path; the access point (11; 12) being formed by an opening provided between two elements that mechanically delimit the safety zone (08; 09), and the access point (11; 12) being monitored by a monitoring sensor system of a monitoring system; two scanners (21) encompassed by the monitoring sensor system, with their respective measuring beams, in each case passing over an angular region situated in the same plane (E) extending in the opening, **characterized in that** the access point (11; 12) is monitored in a pattern of protection fields M(Fj) including multiple protection fields (Fj) having various sizes and/or shapes, that multiple of the protection fields (Fj) having various sizes and/or shapes are in each case encompassed by a next-larger and/or next-wider protection field, entirely or at least viewed in the width and toward the top, that for multiple of these protection fields (Fj) having various sizes and/or shapes, the scan images of the two scanners (21) are checked for a breach of the relevant protection fields (Fj) having various sizes and/or shapes in differing, adjoining or overlapping partial regions (E1; E2) of the plane (E), and information about the permissibility of a determined protection field breach is derived by way of an evaluation of the breach patterns of breached protection fields (Fj) obtained in the two partial regions.

2. Method according to claim 1, **characterized in that** the scan images originating from the two scanners (21) are evaluated for a protection field breach in the differing partial regions (E1; E2) of the respective relevant same protection field (Fj) and/or that, for checking for a protection field breach, protection fields (Fj) are used which extend in the plane (E) mirror-symmetrically with respect to a vertical (V) that centrally intersects the transport path in the plane (E) .

3. Method according to claim 1 or 2, **characterized in that** evaluation means (23) monitor the scan images supplied by the two scanners (21), in the two differing partial regions of the plane (E), which, however, in sum cover at least the overall monitored area, for a penetration of an object into one or more of the protection fields (Fj) having various sizes and/or shapes, and evaluate these as to whether, in the event that a disruption, i.e., a protection field breach, occurs in at least one of the protection fields (Fj), the same breach patterns are found across the protection fields (Fj) to be considered, or breach patterns that only deviate from one another by a definable number of next-larger protection fields (Fj) or wider and/or higher protection fields (Fj), by way of the scan images of the two scanners (21).

4. Method according to claim 1, 2 or 3, **characterized in that** the partial regions (E1; E2) evaluated for a field breach are situated symmetrically in at least one operating situation and/or in a first monitoring case (U1) and/or asymmetrically in at least one operating situation and/or a second monitoring case (U2; U2.1; U2.2) with respect to a vertical (V) that extends in the plane (E) and centrally intersects the transport path leading through the passage, as viewed transversely to the transport direction.

5. Method according to claim 4, **characterized in in that** switching between the first and the second monitoring case (U2; U2.1; U2.2) or one of multiple variants (U2.1; U2.2) of the second monitoring case (U2) occurs as a function of the occurrence of a breach of a first protection field (F1; F1.1; F1.2) of the plurality of protection fields (Fj),
- the monitoring leading up to the passage of a roll (16; 17) to be transferred taking place in the first monitoring case (U1);
- a switch being made into a second monitoring case (U2; U2.1; U2.2) when a breach of the first field (F1; F1.1; F1.2) is determined; and
- during operation in the second monitoring case (U2) or one of its variants (U2.1; U2.2) for the case that the first protection field (F1) is no longer breached, however one or more of the remaining protection fields (Fj) is or are breached, the monitoring process being switched into the first monitoring case (U1).

6. Method according to claim 1, 2, 3, 4 or 5, **characterized in that** the access point (11; 12) is monitored in a pattern of protection fields M(Fj) which comprises at least one protection field (Fj) that is arranged and configured so as to be encompassed, at least in its width and/or toward the top, by the next-larger protection field (Fj+1), and/or in a pattern of protection fields M(Fj) made up of a number k of protection fields (Fj), which in the number k of protection fields (Fj) encompasses a plurality of protection fields (Fj) nested inside one another such that a respective protection field (Fj) of this plurality is in each case encompassed by a next-larger protection field (Fj+1), entirely or at least in its width and/or toward the top, and/or that the passage (11; 12) is monitored in 4 to 12 protection field steps and/or, using a plurality of 3 to 11 protection fields (Fj) nested inside one another, that a respective protection field (Fj) of this plurality is in each case comprised by a next-larger or next-wider and/or next-higher dimensioned protection field (Fj+1), entirely or at least in its width and/or toward the top.

7. Method according to claim 1, 2, 3, 4, 5 or 6, **characterized in that**, in the event that the same breach patterns are found across the protection fields (Fj) to be considered, or breach patterns that only deviate from one another by a definable number of next-larger and/or next-wider protection fields (Fj), for the two partial regions (E1; E2) by way of the scan images of the two scanners (21) while an object (16; 17) is passing through, a triggering of safety measures is suppressed, i.e., a so-called muting function is activated, for the protection field or fields (Fj) affected by the breach, and a safety measure is initiated in the event of a deviation beyond that in the two determined breach patterns.

8. Device for monitoring an access point (11; 12) leading into a safety zone (08; 09) of a roll unwinder or winder (03; 04), through which rolls (16; 17) can be transported in and/or out, in particular for carrying out the method according to any one of claims 1 to 7; the access point (11; 12) being formed by an opening provided between two elements that mechanically delimit the safety zone (08; 09), and a monitoring sensor system being provided for monitoring the access point (11; 12); the monitoring sensor system comprising two scanners (21), the respective measuring beams of which in each case pass over an angular region situated in the same plane (E) extending in the opening, **characterized in that** a pattern of protection fields M(Fj) including multiple protection fields (Fj) having various sizes and/or shapes is provided for monitoring the access point (11; 12), of which multiple are in each case encompassed by a next-larger and/or next-wider protection field, entirely or at least viewed in the width and toward the top, and that evaluation means (23) are comprised, which, for multiple of these protection fields (Fj) having various sizes and/or shapes, check and/or can check the scan images of the two scanners (21) for a breach of the relevant protection fields (Fj) having various sizes and/or shapes in differing, adjoining or overlapping partial regions (E1; E2) of the plane (E).

9. Device according to claim 8, **characterized in that** the scan images of the two scanners (21) can be evaluated by the evaluation means (23) for a protection field breach in the differing partial regions of the respective same protection field (Fj) situated in the plane (E) and/or information about the permissibility of a determined protection field breach can be derived by way of an evaluation of the breach patterns of breached protection fields (Fj) obtained in the two partial regions.

10. Device according to claim 8 or 9, **characterized in that** the two scanners (21) are arranged on both sides of the transport path and/or are arranged at the same height and/or above the upper side of a transported roll (16; 17) having a maximum diameter (Dₘₐₓ) to be used and/or are arranged axially symmetrically with respect to a vertical (V), which extends in the monitoring plane (E) and is situated centrally in relation to the transport path leading through the passage.

11. Device according to claim 8, 9 or 10, **characterized in that** the one or more of the protection fields (Fj) used for checking for a protection field breach extend in the plane (E) mirror-symmetrically with respect to a vertical (V) that centrally separates the transport path in the plane (E).

12. Device according to claim 11, **characterized in that** a first protection field (F1) is provided so as to partially overlap at least one smallest of the protection fields (Fj) situated inside one another and/or so as to extend in the plane (E) from both sides of the passage (11; 12) to be monitored to a respective field boundary, which between one another delimit a surface area that is symmetrical with respect to a vertical (V) and not attributable to the first protection field (F1).

13. Device according to claim 8, 9, 10, 11 or 12, **characterized in that** the evaluation means (23) are configured to monitor the scan images supplied by the two scanners (21) for a penetration of an object into one or more of the protection fields (Fj) having various sizes and/or shapes in the two differing partial regions of the plane (E), which, however, in sum cover at least the overall monitored area, and to evaluate these as to whether, in the event that a disruption occurs, i.e., a breach in at least one of the protection fields (Fj), the same breach patterns are found across the protection fields (Fj) to be considered, or breach patterns that only deviate from one another by a definable number of next-larger and/or next-wider protection fields (Fj), by way of the scan images of the two scanners (21).

14. Printing press, comprising a roll unwinder (03), from which web-format printing substrate (02) can be unwound, and/or a roll winder (04), onto which previously printed web-format printing substrate (02) can be wound, and a printing unit (01), a safety zone (08; 09) extending on at least the operating side of the unwinder (03) and/or winder (04), which is bounded by the unwinder and winder (03; 04) themselves as well as by one or more adjoining sub-assemblies and/or mechanical barrier devices (13) and comprises at least one first access point (11; 12), which is monitored by sensors and through which rolls (16; 17) can be transported into and/or out of the safety zone (08; 09), **characterized by** a device according to any one of claims 8 to 13.

15. Printing press according to claim 14, **characterized in that** the printing unit (01) is configured as a printing unit (01) that operates according to a plateless printing method and/or comprises ink jet print heads.

## Revendications

1. Procédé de surveillance d'un accès (11; 12) menant à une zone de sécurité (08; 09) d'un dérouleur ou d'un enrouleur de bobine, à travers lequel accès des bobines (16; 17) peuvent être transportées à l'intérieur et/ou à l'extérieur le long d'un chemin de transport, dans lequel l'accès (11; 12) est formé par une ouverture prévue entre deux éléments délimitant mécaniquement la zone de sécurité (08; 09), et dans lequel l'accès (11; 12) est surveillé par une technologie de capteurs de surveillance d'un système de surveillance, dans lequel deux scanners (21) compris dans la technologie de capteurs de surveillance balaient respectivement avec leurs faisceaux de mesure respectifs une zone angulaire se situant dans un même plan (E) se déroulant dans l'ouverture, **caractérisé en ce que** l'accès (11; 12) est surveillé dans un modèle de champs de protection M(Fj) avec plusieurs champs de protection (Fj) de tailles et/ou de formes différentes, **en ce que** plusieurs des champs de protection (Fj) de tailles et/ou de formes différentes sont respectivement compris dans un champ de protection suivant plus grand et/ou suivant plus large, entièrement ou au moins dans la largeur et considéré vers le haut, **en ce que** pour plusieurs de ces champs de protection (Fj) de tailles et/ou de formes différentes les images de balayage des deux scanners (21) dans des zones partielles (E1; E2) du plan (E) différentes l'une de l'autre, se raccordant ou se chevauchant l'une l'autre, sont vérifiées quant à une violation de champ de protection des champs de protection (Fj) concernés de tailles et/ou de formes différentes, et une information sur la validité d'une violation de champ de protection constatée est déduite via une analyse des modèles de violation de champs de protection (Fj) violés, obtenus dans les deux zones partielles.

2. Procédé selon la revendication 1, **caractérisé en ce que** les images de balayage issues des deux scanners (21) sont analysées quant à une violation de champ de protection dans les zones partielles (E1; E2) différentes l'une de l'autre du même champ de protection (Fj) respectivement concerné et/ou **en ce que** pour la vérification d'une violation de champ de protection sont mis à contribution des champs de protection (Fj) qui s'étendent dans le plan (E) en symétrie spéculaire par rapport à une verticale (V) coupant au milieu le chemin de transport dans le plan (E).

3. Procédé selon la revendication 1 ou 2, **caractérisé en ce que** des moyens d'analyse (23) surveillent les images de balayage livrées par les deux scanners (21) dans les deux zones partielles du plan (E) différentes et recouvrant cependant par leur somme au moins la totalité de la zone surveillée quant à une pénétration d'un objet dans un ou plusieurs des champs de protection (Fj) de tailles et/ou de formes différentes, et analysent ainsi si, lors de l'apparition d'une perturbation, c'est-à-dire d'une violation de champ de protection dans au moins un des champs de protection (Fj), sont constatés, via les images de balayage des deux scanners (21), des mêmes modèles de violation par-dessus les champs de protection (Fj) à considérer ou des modèles de violation qui s'écartent l'un de l'autre uniquement d'un nombre définissable de champs de protection (Fj) suivants plus grands ou plus larges et/ou plus hauts.

4. Procédé selon la revendication 1, 2 ou 3, **caractérisé en ce que** les zones partielles (E1; E2) analysées quant à une violation de champ se trouvent dans au moins une situation de fonctionnement et/ou un premier cas de surveillance (U1) en symétrie par rapport à une verticale (V) et/ou dans au moins une situation de fonctionnement et/ou un second cas de surveillance (U2; U2.1; U2.2) en asymétrie par rapport à une verticale (V), qui se déroule dans le plan (E) et coupe au milieu le chemin de transport menant à travers le passage considéré transversalement par rapport à la direction de transport.

5. Procédé selon la revendication 4, **caractérisé en ce qu'**une commutation entre le premier et le deuxième cas de surveillance (U2; U2.1; U2.2) ou l'une parmi plusieurs variantes (U2.1; U2.2) du deuxième cas de surveillance (U2) s'effectue en fonction de l'apparition d'une violation d'un premier champ de protection (F1 ; F1.1 ; F1.2) des plusieurs champs de protection (Fj), dans lequel
- la surveillance dans le champ précédant le passage à travers d'une bobine (16; 17) à transférer se produit dans le premier cas de surveillance (U1),
- lors du constat d'une violation de champ du premier champ (F1; F1.1; F1.2), une commutation est réalisée vers un second cas de surveillance (U2; U2.1; U2.2),
- la surveillance lors du fonctionnement dans le second cas de surveillance (U2) ou l'une de ses variantes (U2.1; U2.2) pour le cas où le premier champ de protection (F1) n'est plus violé, cependant un ou plusieurs des champs de protection (Fj) restants est ou sont violé (s), une commutation est réalisée vers le premier cas de surveillance (U1).

6. Procédé selon la revendication 1, 2, 3, 4 ou 5, **caractérisé en ce que** l'accès (11; 12) est surveillé dans un modèle de champs de protection M(Fj), lequel comprend au moins un champ de protection (Fj) qui est agencé et conçu de sorte qu'il soit compris au moins dans sa largeur et/ou en allant vers le haut dans le champ de protection (Fj+1) suivant plus grand et/ou dans un modèle de champs de protection M(Fj) extrait d'un nombre k de champs de protection (Fj), lequel dans le nombre k de champs de protection (Fj) comprend une pluralité de champs de protection (Fj) imbriqués les uns dans les autres de sorte qu'un champ de protection (Fj) respectif de cette pluralité soit respectivement compris entièrement ou au moins dans sa largeur et/ou en allant vers le haut dans un champ de protection (Fj+1) suivant plus grand, et/ou **en ce qu'**une surveillance du passage (11; 12) se produit dans 4 à 12 niveaux de champ de protection et/ou en utilisant une pluralité de 3 à 11 champs de protection (Fj) imbriqués les uns dans les autres de sorte qu'un champ de protection (Fj) respectif de cette pluralité soit respectivement compris entièrement ou au moins dans sa largeur et/ou en allant vers le haut dans un champ de protection (Fj+1) se terminant suivant plus grand ou suivant plus large et/ou suivant plus haut.

7. Procédé selon la revendication 1, 2, 3, 4, 5 ou 6, **caractérisé en ce que** pour le cas où pendant un passage d'un objet (16; 17) pour les deux zones partielles (E1; E2) sont constatés, via les images de balayage des deux scanners (21), des mêmes modèles de violation par-dessus les champs de protection (Fj) à considérer ou des modèles de violation qui s'écartent l'un de l'autre uniquement d'un nombre définissable de champs de protection (Fj) suivants plus grands et/ou plus larges, pour le ou les champ(s) de protection (Fj) concerné(s) par la violation un déclenchement de mesures de sécurité est réprimé, c'est-à-dire que ce qu'on appelle une fonction d'inhibition est activée, et lors d'un écart partant de là dans les deux modèles de violation constatés est mise en œuvre une mesure de sécurité.

8. Dispositif de surveillance d'un accès (11; 12) menant à une zone de sécurité (08; 09) d'un dérouleur ou d'un enrouleur de bobine (03; 04), à travers lequel accès des bobines (16; 17) peuvent être transportées à l'intérieur et/ou à l'extérieur, en particulier pour l'exécution du procédé selon l'une des revendications 1 à 7, dans lequel l'accès (11; 12) est formé par une ouverture prévue entre deux éléments délimitant mécaniquement la zone de sécurité (08; 09), et dans lequel une technologie de capteurs de surveillance est prévue pour la surveillance de l'accès (11; 12), dans lequel la technologie de capteurs de surveillance comprend deux scanners (21) dont les faisceaux de mesure balaient respectivement une zone angulaire se situant dans un même plan (E) se déroulant dans l'ouverture, **caractérisé en ce que** pour la surveillance de l'accès (11; 12) est prévu un modèle de champs de protection M(Fj) avec plusieurs champs de protection (Fj) de tailles et/ou de formes différentes, desquels plusieurs est ou sont compris, entièrement ou au moins dans la largeur et considéré vers le haut, dans respectivement un champ de protection suivant plus grand et/ou plus large, et **en ce que** des moyens d'analyse (23) sont compris via lesquels, pour plusieurs de ces champs de protection (Fj) de tailles et/ou de formes différentes, les images de balayage des deux scanners (21) dans des zones partielles (E1; E2) du plan (E) différentes l'une de l'autre, se raccordant ou se chevauchant l'une l'autre, sont et/ou peuvent être vérifiées quant à une violation de champ de protection des champs de protection (Fj) concernés de tailles et/ou de formes différentes.

9. Dispositif selon la revendication 8, **caractérisé en ce que** via les moyens d'analyse (23) les images de balayage des deux scanners (21) peuvent être analysées quant à une violation de champ de protection dans les zones partielles différentes l'une de l'autre du respectivement même champ de protection (Fj) se situant dans le plan (E) et/ou une information sur la validité d'une violation de champ de protection constatée peut être déduite via une analyse des modèles, obtenus dans les deux zones partielles, de violation de champs de protection (Fj) violés.

10. Dispositif selon la revendication 8 ou 9, **caractérisé en ce que** les deux scanners (21) sont agencés des deux côtés du chemin de transport et/ou sont agencés à une même hauteur et/ou par-dessus le côté supérieur d'une bobine (16; 17) transportée de diamètre maximal à utiliser (Dₘₐₓ) et/ou sont agencés en symétrie axiale par rapport à une verticale (V) qui se déroule dans le plan de surveillance (E) et se situe au milieu par rapport au chemin de transport menant à travers le passage.

11. Dispositif selon la revendication 8, 9 ou 10, **caractérisé en ce que** les ou plusieurs des champs de protection (Fj) mis à contribution pour la vérification d'une violation de champ de protection s'étendent dans le plan (E) en symétrie spéculaire par rapport à une verticale (V) séparant de manière centrale le chemin de transport dans le plan (E).

12. Dispositif selon la revendication 11, **caractérisé en ce qu'**un premier champ de protection (F1) est prévu de sorte qu'il chevauche partiellement au moins un le plus petit des champs de protection (Fj) se situant les uns dans les autres et/ou **en ce qu'**il s'étend dans le plan (E) depuis les deux côtés du passage (11; 12) à surveiller jusqu'à chacune une limite de champ qui délimitent entre elles une zone de surface symétrique par rapport à une verticale (V) et à ne pas compter dans le premier champ de protection (F1).

13. Dispositif selon la revendication 8, 9, 10, 11 ou 12, **caractérisé en ce que** les moyens d'analyse (23) sont aménagés pour surveiller les images de balayage livrées par les deux scanners (21) dans les deux zones partielles du plan (E) différentes et recouvrant cependant par leur somme au moins la totalité de la zone surveillée quant à une pénétration d'un objet dans un ou plusieurs des champs de protection (Fj) de tailles et/ou de formes différentes, et analyser ainsi si, lors de l'apparition d'une perturbation, c'est-à-dire d'une violation de champ de protection dans au moins un des champs de protection (Fj), sont constatés, via les images de balayage des deux scanners (21), des mêmes modèles de violation par-dessus les champs de protection (Fj) à considérer ou des modèles de violation qui s'écartent l'un de l'autre uniquement d'un nombre définissable de champs de protection (Fj) suivants plus grands et/ou plus larges.

14. Machine d'impression avec un dérouleur de bobine (03) depuis lequel un support d'impression (02) en forme de bande peut être déroulé et/ou un enrouleur de bobine (04) sur lequel un support d'impression (02) en forme de bande et imprimé au préalable peut être enroulé, et avec un groupe d'impression (01), dans laquelle une zone de sécurité (08; 09) s'étend sur au moins le côté d'utilisation du dérouleur de bobine (03) et/ou de l'enrouleur de bobine (04), laquelle est limitée par le dérouleur ou l'enrouleur (03; 04) lui-même ainsi que par un ou plusieurs agrégats se raccordant et/ou des équipements d'arrêt (13) mécaniques et comprend au moins un premier accès (11; 12) surveillé par technologie de capteurs, à travers lequel accès des bobines (16; 17) peuvent être transportées à l'intérieur et/ou à l'extérieur de la zone de sécurité (08; 09), **caractérisée par** un dispositif selon l'une des revendications 8 à 13.

15. Machine d'impression selon la revendication 14, **caractérisée en ce que** le groupe d'impression (01) est conçu en tant que groupe d'impression (01) travaillant selon un procédé d'impression démuni de forme d'impression et/ou en tant que groupe d'impression présentant des têtes d'impression à jet d'encre.
